# EUROPEAN PATENT APPLICATION

(11) **EP 1 244 018 A1**
(43) Date of publication of application: **25.09.2002**
(21) Application number: 99907881.9
(22) Date of filing: 08.03.1999
(51) Int. Cl.: G06F 12/00, G06F 13/00, G06F 9/06

(54) **METHOD AND APPARATUS FOR MANAGING VALIDITY TIME OF DATA IN DISTRIBUTED PROCESSING SYSTEM AND RECORDING MEDIUM**

(71) Applicant: Athena Telecom Lab, Inc., Koganei-shi, Tokyo 184-0011 (JP)
(72) Inventor: KAMIMURA, Kunio, Koganei-shi, Tokyo 184-0011 (JP)
(74) Representative: Cabinet Hirsch
(86) International application number: JP9901107
(87) International publication number: WO00054157

(57) **Abstract**

In a distributed processing system, a provider of an original data assigns a valid date to a data in order to realize an environment in which an operator can utilize the latest data with a minimum communication quantity. An apparatus of the data user checks the valid date of a copy of a data in response to an operator's request for the data. If the copy is valid, it would provide the copy. If the copy is invalid, it would operate the following process in addition to a process for generating and providing a new copy by reading in the latest data from an apparatus holding the original data. (b) The apparatus of data user records "a designation of original data, a version distinguish data of original data, the valid date" in accordance with the copy held by the apparatus. (a) It receives an instruction for revising the valid date of the copy held by the apparatus. (c) It specifies the copy of a version that is equivalent to or older than the version corresponding to the designation of original data included in the instruction for revising the valid date as well as to the version distinguish data of the original data and rewrites the corresponding valid date.

An apparatus of data controller operates the following processes. (j) It records "the designation of original data, the version distinguish data of original data, the valid date" of data of which the valid date is revised. (k) It retrieves a record among these records which corresponds to the original data indicated by the apparatus for data user, and sends it to the data user that has requested the record.

## Description

### Technical Field

The present invention relates to a method for controlling a valid date for data in a distributed processing system in which plural computers are connected by communication circuits, a computer-readable media recording a program that realized this method, and an apparatus for controlling the valid date for the data.

### Background Art

### 〈〈Section 1: Data access in distributed processing system〉〉

### 〈〈Section 1.1: Introduction of plural copies〉〉

Frequent access from many computers to an original data existing only in one computer within the distributed processing system, in which plural computers are connected by communication circuits, leads increase and concentration in communication quantity **[Problem 1]** . It would lead further problems such as deterioration in a system response. In order to solve the problem without introducing an enormous communication equipment, the inventor of this invention has proposed a method in which "user's computers (clients) generate, hold, and utilize their own copies of an original data received from a computer holding the original data (server)". This method eases the absolute quantity and the concentration in communications. Despite of this merit, the method accompanies a possibility of causing the increase in communication quantity as a server tries to notify a revision in its original data simultaneously towards its plural clients without delay **[Problem 2]**.

### 〈〈Section 1.2: Assignment of valid date for copy by client〉〉

Thereby, Japanese patent application HEISEI6-215031 (Document 1) illustrates an idea for permitting uncertainty in a coincidence of an original data and its copy (Line 45-47 of sixth column in Document 1). In specific, clients assign an expiration date for a date that has already been determined on the copy (Line 30-32 of seventh column in Document 1), and assume that the copy is valid till the expiration date (Line 1-2 of seventh column in Document 1). In Patent 2504218 (Document 2), clients generate a renewal expected time by adding a certain period of time to a renewal time (Line 36-37 of sixth column in Document 2) on the assumption that an original data is to be renewed for every certain periods (Line 30-35 of sixth column in Document 2).

In both methods described in the above, it is the clients that assume (of their own accords?) the valid date for data.

### 〈〈Section 1.3: Assignment of valid date for copy by server〉〉

On the contrary, there is a method in which a server assigns and distributes a valid date for copy as it distributes a content of an original data to its client. If the client can confirm in usage that the copy is valid by referring to the valid date, it would not need to access to the server. If it finds the copy invalid, it would receive the latest original data by accessing to the server and generate a new copy.' If an original data can be renewed within the server in correspondence with the valid date determined in advance, the server would be enabled to distribute the latest data with the minimum communication quantity at 'all the time. PCT/JP97/00971 (Document 3) illustrates this technical idea.

### 〈〈Section 1.4: Problems in valid date revision〉〉

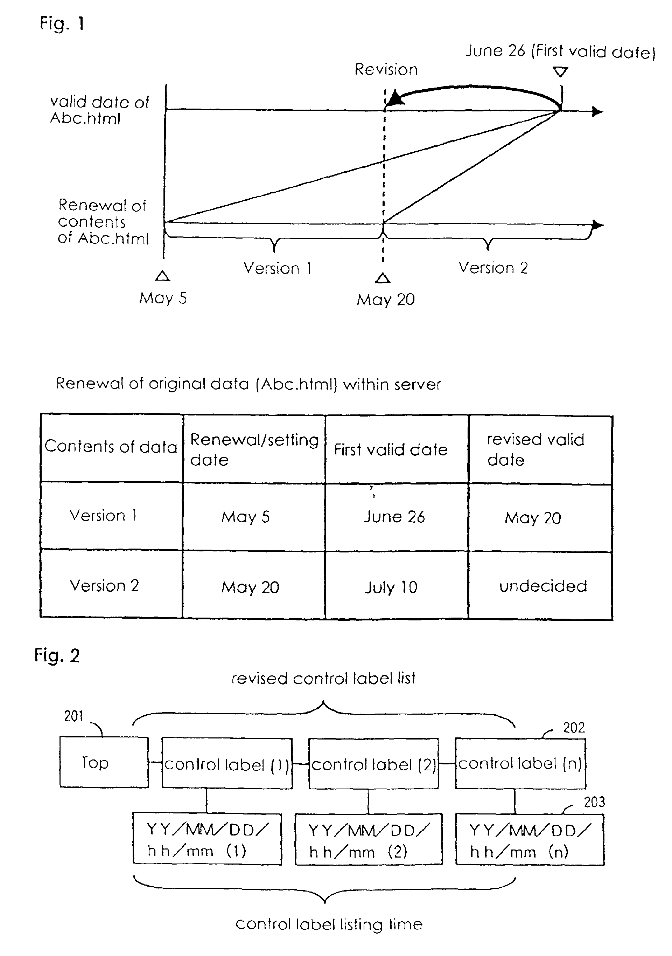

A new problem would arise, however, when an original data of a server is revised at an unexpected time. Its concrete example is a revision in a valid date for an original data (Abc.html) from June 26 to May 20 (FIG1). An original data before May 20 is Version 1, and an original data after May 20 is Version 2. A client holding a copy of Version 1 is unable to recognize a revision in the original data until the first valid date (June 26) so it would be continuously utilizing the old data **[Problem 3]**.

In order to solve this problem, Document 2 suggests a method for a server to send its all clients (client computer) the renewed data, the renewal time, and the renewal expected time when the original data is unexpectedly renewed (Line 1-2 of second column and Line 3-4 of seventh column in Document 2). If a number of clients is many, the server needs to make a lot of communications for the notification. As a result, it would cause **[Problem 2]** . Therefore, the method described in the above is effective only if the amount of necessary communication equipment can be calculated from the maximum of the number of clients as well as the investment for the communication equipment is tolerable.

Document 1 does not illustrate any processes accompanying the unexpected renewal in original data. This is due to its concept determined by adopting the idea for permitting uncertainty in coincidence of the original data and its copy and by assuming a system usage considering this uncertainty (Paragraph 10 in Document 2). This is a solution method limited to the distributed processing system exclusively used for a specified business that is capable of designing a program action and a system usage form of both the server and the client all together.

### 〈〈Section 2: Application to web data and problems thereof〉〉

An original of web data (data) opened to clients on a server by Internet and Intranet is also only one and is accessed by many clients. Therefore, it also has the same problems described in the previous section.

It is not applicable to adopt the idea for permitting uncertainty in coincidence of the original and its copy as Document 1 on Internet to which many and unspecified operators participate. In reality, clients who cannot permit uncertainty frequently access to the server and cause **[Problem 1]**, as indifferent clients cause **[Problem 3]** .

The method in Document 2 has **[Problem 2]** . A realization of this method on Internet which requires "the server to hold a list of clients that have referred to the specified web data (data) and hold own copies of the web data" would accompany many difficulties in technical field **[Problem 4]** . Moreover, it is technically difficult for a server to send renewed data to its clients without delay because the general clients using dial-up circuits do not make connections with Internet at all the time **[Problem 5]** .

Although the method in Document 3 in which "the server assigns the valid date for every web data (data) and notifies it to its clients, and the clients utilize its own copies only if they are valid" solves **[Problem 1]** and **[Problem 2]**, it accompanies **[Problem 3]** for unexpected revision in original data. In reality, it is often difficult to appropriately determine the valid date for web data in advance. There are data like the weather forecast that are regularly renewed for certain period of time. However, most of renewal plans for the web data cannot be determined in advance. A system, for example, that makes a revision in a web data after finding a description mistake can be considered indifferent to a necessity for renewal before it finds out the mistake.

**[Problem 1]** , **[Problem 2]** , and **[Problem 3]** held originally by the distributed processing system are mutually related; when one problem is reduced, another problems would increase. Although it is difficult to solve these problems perfectly, the present invention tries to clarify a method for reducing these problems simultaneously and greatly as well as solving **[Problem 4]** and **[Problem 5]** that arise on Internet etc.

### DISCLOSURE OF THE INVENTION

### 〈〈Section 3: Basic mechanisms〉〉

### 〈〈Section 3.1: Notification of valid date revision〉〉

"A procedure for inspecting a valid date for a copy when accessing to the copy of data recorded within a client and determining to utilize the copy if it is valid or to obtain the latest original data from the server if it is not valid", that is "a mechanism for obtaining the original data only if the data is 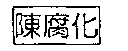 , and the data is necessary" is already disclosed by the inventor of this invention in Document 3. To combine' a mechanism for "notifying the clients of only a revision in valid date" with the mechanism described above is the basic device (Device A) in this invention. It enables the realization of an effective data renewal with the synergism of both mechanisms. It simultaneously solves Problem 1 to Problem 5 through its mechanism for "notifying the clients only a revision in valid date". Followings are further devices for the solution (B1 to B9).

### 〈〈Section 3.2: Complexity in condition control led by notification of only revision in valid date〉〉

It is not easy to notify a revision in valid date appropriately to clients in need of this notification. One of its reasons is because clients with a various conditions exist on Internet or Intranet. FIG1 explains it with an example.

In FIG1, (Version 1 of) Abc.html, an original data, is set up in a server on May 5 with its (first) valid date set on June 26. Abc.html is later renewed with a new content (Version 2) on May 20, and its valid date is renewed to July 10 as well.

On the one hand, clients accessing to the server on and after May 20 and requesting Abc.html a new would receive the content of Version 2 with its valid date (July 10). On the other hand, clients holding Version 1 with its first valid date (June 26) would receive a notification of new valid date (May 20) by a process described in later sections (Section 3.4 to 3.6). Because this notification of revision is carried out according to various circumstances of every clients, there is no guarantee to finish notifying revisions to all clients within a certain period of time. As a result, there would be clients with a various conditions.

Followings are explanations for the various conditions of clients as described in order of periods grouped in certain period of time.

### [Before May 5]

(A) a client without holding a copy of Abc.html
   exists only.

### [May 5 to May 20]

(A) a client without holding a copy of Abc.html,
(B) a client recording a copy of Version 1 of Abc.html and its first valid date (June 26),
   exist all together. The client accessing to the copy of Version 1 in Condition (B) confirms that the copy is valid and utilizes it as the latest data without accessing to the server.

### [May 20 to June 26]

(A) a client without holding a copy of Abc.html,
(B) a client recording a copy of Version 1 of Abc.html and its first valid date (June 26),
(C) a client recording a copy of Version 1 of Abc.html and its new valid date (May 20),
(D)a client recording a copy of Version 2 of Abc.html and its first valid date (July 10),
   exist all together. The client in Condition (B) shifts into Condition (C) when receiving a notification of the new valid date for Version 1 from the server. The client in Condition (C) shifts into Condition (D) by accessing to the server when detecting the copy of Version 1 as expired in its access. The client in Condition (A) shifts into Condition (D) by accessing to the server when Abc.html is necessary. If the client in Condition (B) is not notified of the new valid date for Version 1, the valid date for Version 1 the client holds stays as the first valid date of June 26 as it is. It means that the client cannot detect in its access that the copy is expired. The client, therefore, does not make access to the server and thus, continue to be in Condition (B). This condition produces **[Problem 3]** . Methods for this case will be explained in Section 3.4 to 3.6. The client accessing to Version 2 in Condition (D) utilize the copy of Version 2 as the latest data without accessing to the server because the copy is valid.

### [June 26 to July 10]

There are Condition (A), (B), (C), and (D). The clients accessing to Version 1 in Condition (B) and (C) shift into Condition (D) by accessing to the server and receiving Version 2 with its valid date of July 10 when it detect the copy as expired in its access to Version 1. The client accessing to Version 2 in Condition (D) utilizes the copy of Version 2 as the latest data without accessing to the server because the copy is valid.

### [On and after July 10]

There is still a possibility for Condition (A), (B), (C), and (D) to be exist. The clients accessing to Version 1 or Version 2 in Condition (B), (C), or (D) shift into Condition (A) by accessing to the server when detecting the copy as expired, and detecting the absence of the effective original data. The point of time at which all clients shift into Condition (A) is also the point of time at which all clients finish accessing to the copy of Abc.html. It suggests that this point of time is unpredictable.

In real usage, the system revises the valid date of Version 1 to May 20 when (such as May 18) it determines a plan for renewing the valid date of Version 2 of Abc.html to May 20. Moreover, it carries out further revision in Abc.html and renewal in its valid date as well as revision in other data or its valid date. Therefore, conditions in the reality are much more complicated.

### 〈〈Section 3.3: Effects of notifying clients of renewed valid date〉〉

Notifying the clients only the valid date (May 20) that has been renewed from an old version (such as Version 1) brings greater effect. Because this notification makes the valid date reliable, the clients would be enabled to utilize the copy within itself with "guarantee as the latest data" (or "by assuming it as the latest data with high reliance"). In other words, it greatly reduces **[Problem 1]** as it controls unnecessary communication with the server. This is one of the effects of Device A.

Even with this method, renewed original data (Version 2) would be necessary for clients and would be transferred anyhow. In other words, the method does not solve Problem 2 perfectly, but it would save Version 2 from being sent to all the clients. Only the clients in need of data which detect the copy as expired in its access make access to the renewed original data within the server. Although data such as an encyclopedia including many items might have corrections in misprint or rewritten items based on new discovery, users who look through all those renewed items must be very rare. Therefore, when adopting the method in this invention by setting up the valid date for every items in an encyclopedia CD-ROM, the server would only send the renewal contents of items that are necessary for its users. This would greatly reduce communication quantity (compared to the method in which the server sends all revision contents). It is almost unthinkable for any users to look through all the renewed data (except for a very particular case). The quantity of data to be sent to users would be reduced as a case, in which end-users do not make access to renewed data or the data is further renewed before the end-users make access to it, occurs more frequently (effect of Device A).

Moreover, in Method A of this invention, the only case in which the clients access to the server for obtaining the latest original data would occur when the clients access to the copy of data existing within itself and detect that the copy is expired. This would reduce the concentration of communications compared to the method in Document 2 in which the server sends the renewed original data simultaneously towards many clients.

As described in above, Method A of this invention accompanies much lesser communication load compared to **[Problem 2]** which occurs when the server simultaneously notifies its clients of a whole revised data as described in Document 2. Besides, it continues to hold its advantage for which the clients can obtain the latest data when necessary (effect of Device A).

### 〈〈Section 3.4: Various methods for notifying clients of renewed valid date〉〉

There are several methods for notifying new valid date to computers holding a copy of a version when a valid date of an original data of the version is renewed. One of the methods is to simultaneously notify only the revised valid date. It would accompany much lesser communication quantity compared to the method described in Document 2, in which a server simultaneously notifies the whole renewed data. This would greatly improve the condition in **[Problem 2]** . There is also a method for notifying a revision in valid date by E-mail. This method solves **[Problem 5]** as well. A program attached to E-mail revises a corresponding valid date recorded inside a client.

Following is a method that further reduces the communication quantity, distributes a concentration of communications, and solves **[Problem 4]** and **[Problem 5]** .

### 〈〈Section 3.5: Method for effectively notifying clients of renewed valid date〉〉

The method solves **[Problem 4]** and **[Problem 5]** by referring to a server from end-user computers (Device B1). This is a polling (reference) from clients towards the server.

In order to reduce **[Problem 1]** by far, the method makes a further device on timing for polling utilized for receiving a notification of revision in valid date. If a schedule for a client to poll its server of a revision in valid date is set at 3 o'clock in (every) morning, the conventional method has been making the client to communicate by establishing a connection towards Internet only at this designated time. If the client fails to make communication, it would wait for a next scheduled time. Therein, this invention enables the client to make communication as soon as it successfully establishes the connection towards Internet (for other purpose) after the designated time (3 o'clock in morning) (Device B2). If it fails to establish the connection towards Internet at the designated 3 o'clock in morning, it would not make any communication then and would only register for piggyback communication for the next time it makes communication (for other purpose). Therefore, this method solves a problem that "an user is required to pay for unexpected cost of communication made by an automatic system for making connection towards Internet by dial-up at midnight". If, for example, an operator accesses (checks E-mail etc.) to Internet by utilizing this computer (client) at 9 in morning, it would simultaneously start the polling towards a server, in other words, it refers (to the server) a revision in valid date. The server notifies the revision in valid date at this point in time, and thereby, **[Problem 3]** could be solved. In other words, a client shifts from Condition (B) of <May 20 to June 26> in Section 3.2 into Condition (C). If a client makes access to a copy of Version 1 before accessing to Internet, it would continue to be in Condition (B), and therefore, **[Problem 3]** could not be solved. However in reality, a spread of Internet has made users to make frequent access to Internet, and thus, it has reduced situations for **[Problem 3]** to occur. This method avoids the situation described in Method 2 in which clients receive unexpected full-body data that has been renewed. It (the method in this invention) rather let the clients receive only the data of unexpectedly revised valid date on a communication which the clients make for some necessities, in other words, the clients receive data by a piggyback process. In this system, a number of communications appears to be fixed for the clients, and an increase in communication quantity stays small. **[Problem 2]** is solved through this system of the method. A number of clients who notice the piggyback communication described above can be considered to be small.

A device for further reducing a communication quantity and a number of receptions of revised valid date is the mechanism (Device B3) for collectively receiving plural revised data on valid dates. Clients collectively receive the plural revised data on valid dates from their server as they connect to Internet by dial-up circuit. It is "collective notification of valid dates" for the server. It accompanies much less quantity and time of communication compared to the method in which clients check revisions in valid date for every files of each web data (effect of Device B3).

There is a further necessity for a device (Device B8) for saving clients from receiving another one of same revised data of valid date which they have already received in beforehand. Its details will be explained in Section 3.6.3.

### 〈〈Section 3.6: Condition control corresponding to the method for notifying only revision in valid date〉〉

Section 3.2 has explained that there are various conditions of clients. The followings are concrete methods for controlling these conditions.

### 〈〈Section 3.6.1: Procedure for generating first copy and recording valid date〉〉

When generating a first copy of a data (such as Abc.html) within a client, the system records [designation of original data, version distinguish data, valid date] in correspondence with the copy (Device B4). Followings are details for each one of them. A set of this data will be called as "control label" in the rest of the text.
(1) Designation of original data:
   It is the data indicating a place where the original data that has been the origin for a copy exists. URL without the designation of communication protocol (and the designation of port) indicates a place on Internet where the original data exists.
(2) Version distinguish data:
   There is a possibility for the original data to be revised over and over again. A data designating specific contents (data) among those revised original data is the version distinguish data. Version number is its concrete example. The first original data is Version 1, and it transforms into Version 2, Version 3, and so on, according to following revisions.
   In the conventional method represented by Document 2, a server notifies all clients of a content of the latest original data (such as Version 2) and its valid date (such as July 10) so that it had been unnecessary for the clients to be aware of versions of data. In the method of this invention, however, the server revises valid date of copy of old content (data) existing within clients so that it becomes necessary for the clients to clarify the version of the copy.
(3) Valid date:
   It is the valid date of data of designated version.
   Clients, the requester of the data, previously understand the designation of original data (URL) among the data described in the above. The rest of the data, the version distinguish data and the valid date ([Version 1, June 26] for the period before May 20 in FIG1), would be notified to the clients from the server. The clients record these sets as the control labels.

### 〈〈Section 3.6.2: Contents of notification of revision in valid date and process of clients thereof〉〉

As a server revises a valid date of a data, it notifies its clients of [designation of original data, revised version, revised valid date] in return to polling made by the clients. In other words, the server sends a revised control label. The clients that receive the notification would rewrite the corresponding "control label" for "designation of original data" and "version data" (they actually rewrite the valid date).

If a client has a copy of data of a version older than the designated version, and its valid date is set longer than the notified valid date, it would rewrite the existing valid date with the notified valid date (Device B5). This idea is based on a hypothesis that the valid date of the copy of old version must be no longer than that of new version. In this case, a point in time for generating or revising the version can be used as a data for distinguishing the version instead of version number (Device B6).

### 〈〈Section 3.6.3: Introduction of control label list and previous reception time〉〉

A server collectively distributes plural revised data of valid dates (that is the revised control labels) in return to the polling made by its clients (Device B3). It is useless, however, to send same contents at every time. Therein, the following method (Device B7) introducing "previous reception time" is effective.

The server lines up revised control labels 202 in order of their revised time. It then matches records (of the server) of listing time 203 with each one of those control labels. FIG2 illustrates this system.

If there are no designations of time in polling made by the clients, the server notifies the clients of the all control labels on the list as well as the server time at which the notification is made. This is the "previous reception time". The clients hold this time and notify it to the server at the next polling. The server, on return, notifies the clients of only the control labels added to the list after the time notified by the clients as well as the server time at which the notification is made. In this way, the communication quantity can be reduced as the server sends only the control labels added to the list after the previous reception time (effect of Device B7).

### 〈〈Section 3.6.4: Notification of control target for valid date within client〉〉

If a client, in its polling, notifies its server of the designation of original data of which the client controls the valid date (Device B8), the server would be able to notify the client of only the revised data of the valid date of this original data (that is the revised control label). This device would further reduce the communication quantity (effect of Device B8).

However, a quantity of data of which a client notifies its server would be predictably high as a number of the control labels the client holds increases. For example, suppose the designation of original data that is control target for valid date has been designated by URL, a client with 200 control labels must notify its server of the 200 URL for ever polling.

In order to solve this problem, all original data existing under a directory path of a URL are determined as the control target for valid date (Device B9). In other words, collecting a bunch of original data as a set of original data of control target for valid date under one URL enables clients to notify the server of only one URL. This one URL is called "top designation of control target original data". The server notifies its clients of a revision in original data existing under the top designation of original control data (notified by the clients). This device reduces the communication quantity as it enables the client to notify the server of only one URL (top designation of original control data) instead of the 200 URL described in the previous example (Effect of Device B9).

### BEST MODE OF OPERATING THE INVENTION

### 〈〈Section 4: Computers connected by communication networks〉〉

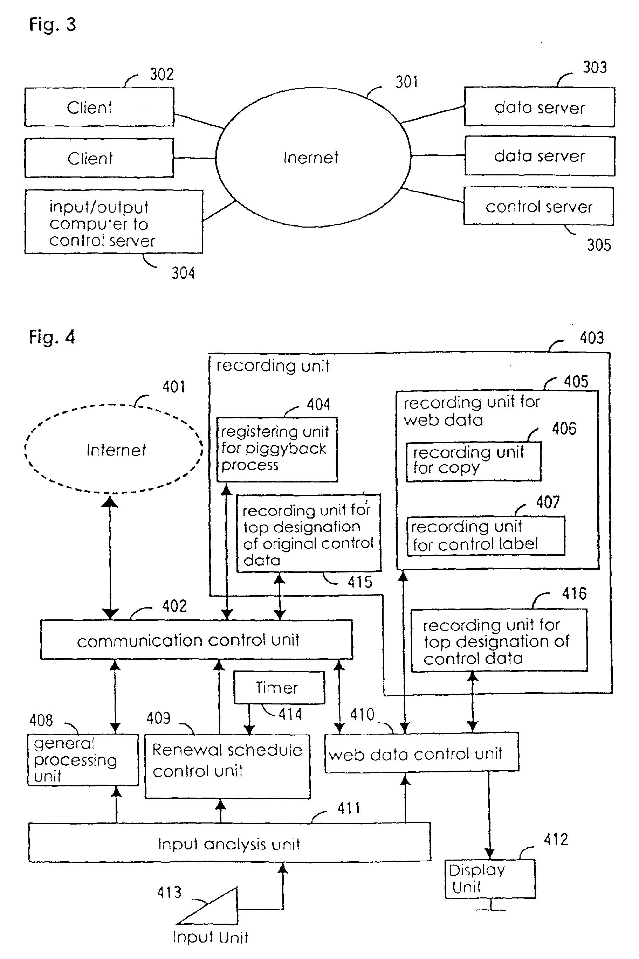

FIG3 illustrates computers related to this invention and Internet 301 connecting these computers. There are "data server" 303 holding original data and "client" 302 reading the original data. A server sending homepages is the data server 303, and many computers such as personal computers reading these homepages are the clients 302.

Besides them, there is "control server" 305 that controls valid date data of data existing within the data server and sends revised data of the valid date to its clients. It is possible to combine tasks of data server 303 and control server 305 into one computer. However, if plural data servers 303 hold original data that is control target for valid date, control server 305 that is common to those data servers should be utilized for the convenience. It enables the client 302 to obtain valid date revised data only by polling to this one (or small number of) common control server 305.

There is "input/output computer to control server" 304. It controls setting or revision of valid date of original data held by data server 303 and notifies control server 305 of the revision in valid date. The input/output computer to control server 304 can be realized as one with client 302 or data server 303 or control server 305.

Followings are details of valid date control within client 302 and control server 305.

### 〈〈Section 5: Client〉〉

### 〈〈Section 5.1: Hardware construction of client〉〉

FIG4 illustrates a construction of hardware of a client. The hardware operates "process at web data reception", "process for retrieving web data requested by operator", and "polling process towards server". These processes can also be operated by a general computer (such as personal computer) equipped with communication functions.

Followings are details of these processes and relationships with the hardware construction illustrated in FIG4.

### 〈〈Section 5.2: Process at web data reception〉〉

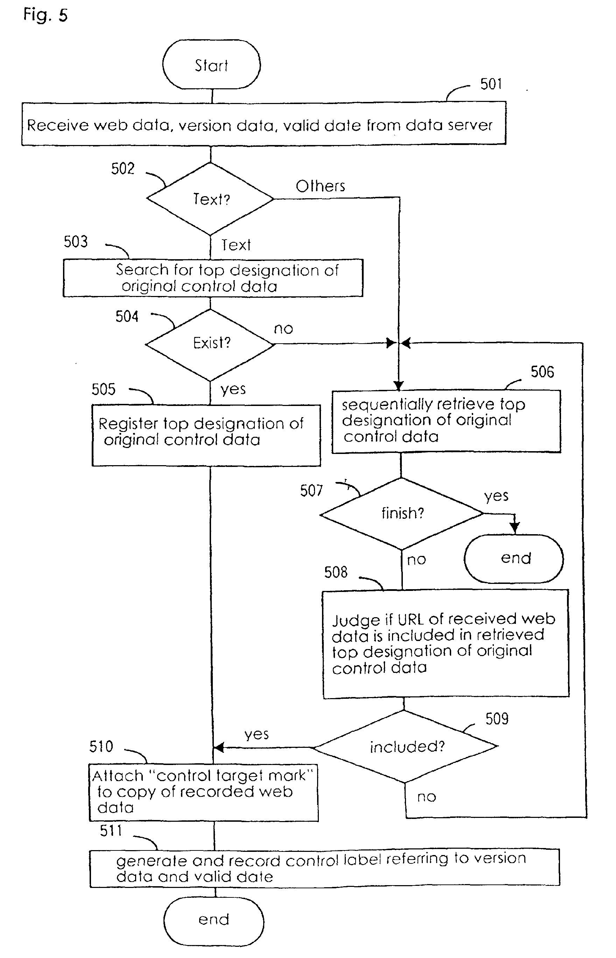

FIG5 illustrates the process at web data reception. This process is started when there are no valid copies of web data inside client computers in the process for retrieving web data (Section 5.3). Within the client apparatus, input analysis unit 411 analyzes a signal from input unit, and the signal would be sent to "web data control unit" 410 if it is the request for web data. If there are valid copy in recording unit for web data 405 within recording unit 403, it would be displayed on display unit 412. If there are non, the apparatus would start communication control unit 402, connect to Internet 401, and receive web data from data server 303. A copy of this web data would be recorded on recording unit for copy 406 of recording unit for web data 405 and would be displayed on display unit 412.

In the series of processes, processes operated just at the web data reception are started with a process for "receiving web data, version data, valid date from data server 303" 501. If a received web data is HTML file, it would check if the top designation of original control data is included in the text. This is "search for top designation of original control data" 503. It first searches if a series of letters "AlwaysNew" exists in a comment within the HTML file. One following the series of letters is the top designation of original control data.

If <!AlwaysNew:www.atele.com/> has been written on the file, "www.atele.com/" would be the top designation of original control data. It implies that the valid dates of all web data included in this path (included in the directory or sub-directory) are controlled by the method of this invention.

If there is the top designation of original control data, the system would record it in "recording unit for top designation of original control data" 415. This is the step to "register top designation of original control data" 505. This record would be unnecessary if the same record already exists. Next, it "attaches "control target mark" to copy of recorded web data" 510. This control target mark would be utilized in a process for retrieving web data (Section 5.3).

If there are no top designations of original control data in the received HTML file, it judges if URL of the received web data is included in the top designation of original control data recorded in "recording unit for top designation of original control data" 416. This is the series of the processes starting with the step to "sequentially retrieve top designations of original control data" 506, passing through a judgment of "finish?" 507 and the step to "judge if URL of received web data is included in retrieved top designation of original control data" 508, and ending with a judgment of "included?" 509.

If a data is considered as the control target, the system "attaches "control target mark" to copy of recorded web data" 510. It then "generates and records (in recording unit for control label 407) control label referring to version data and valid date" 511 of received web data.

### 〈〈Section 5.3: Process for retrieving web data〉〉

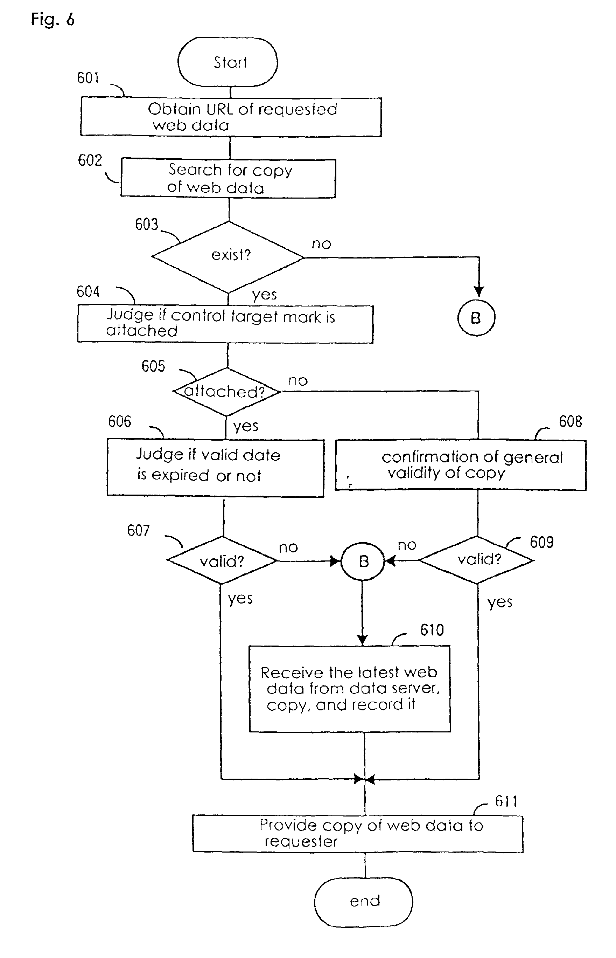

FIG6 illustrates the process for retrieving and providing web data requested by operators (or programs) of clients. Within the clients' apparatus, input analysis unit 411 analyzes the operators' requests that have been input into input unit 413. If they are considered as the requests for web data, a signal would be sent to "web data control unit" 410. At this time, the system first "obtains URL of requested web data" 601, and then it searches for a copy of the requested web data by accessing to recording unit for copy 406.

If it cannot find any copies, it would notify the signal to communication control unit 402 and "receive the latest web data from data server 303, copy and record it" 610 by connecting to Internet 401. Its details are already explained in Section 5.2. The system finally "provides copy of web data to requester" 611.

If the system finds the copy of requested web data in recording unit for copy 406, it would "judge if control target mark is attached" 604 to the copy. The control target mark would be set up in the process at web data reception described in Section 5.2.

If the control target mark is not attached to the copy, the system would operate the following processes just the same as a normal web data. It first "confirms general validity of copy" 608. A general browser offers selection of ways for confirming new version of pages that have been saved as setting of "Internet temporary file" as following: "confirm every time operator displays pages", "confirm every time operator starts the browser", and "do not confirm". The system of this invention also adopts the above selection and confirms the validity of copy referred to it in the step to "confirm general validity of copy" 608. If the copy is considered invalid, it would "receive the latest web data from data server 303, copy and record it" 610 and then "provide copy of web data to requester" 611. If the copy is considered valid, it would just "provide copy of web data to requester" 611.

If the control target mark is attached to the copy, the system would search for corresponding control label from "recording unit for control label" 407 and "judges if valid date (recorded on it) is not yet expired" 606. If it is considered valid, the system would just "provide copy of web data to requester" 611. If it is considered invalid, it would "receive the latest web data from data server 303, copy and record it" 610, and then it would "provide copy of web data to requester" 611.

In the procedure described in the above, if the control target mark is not attached to the copy, clients would utilize their own copy of web data or request original data a new, etc. based on the standard which operators of the clients have designated (irrelevant to intentions of data distributor). Contrary, if the control target mark is attached to the copy, the clients would operate process on the assumption that the valid date which has been originally assigned by data distributor and has been recorded on control label is correct. This is due to the fact that the clients previously assume "revision in valid date to be notified when it happens".

### 〈〈Section 5.4: Polling process towards server〉〉

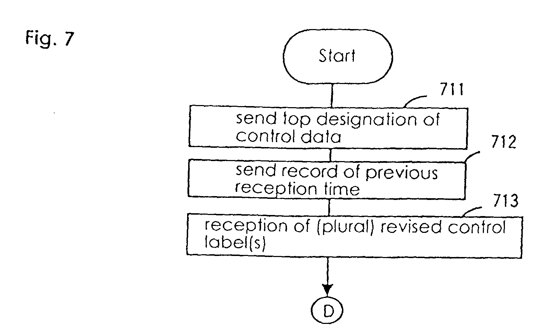

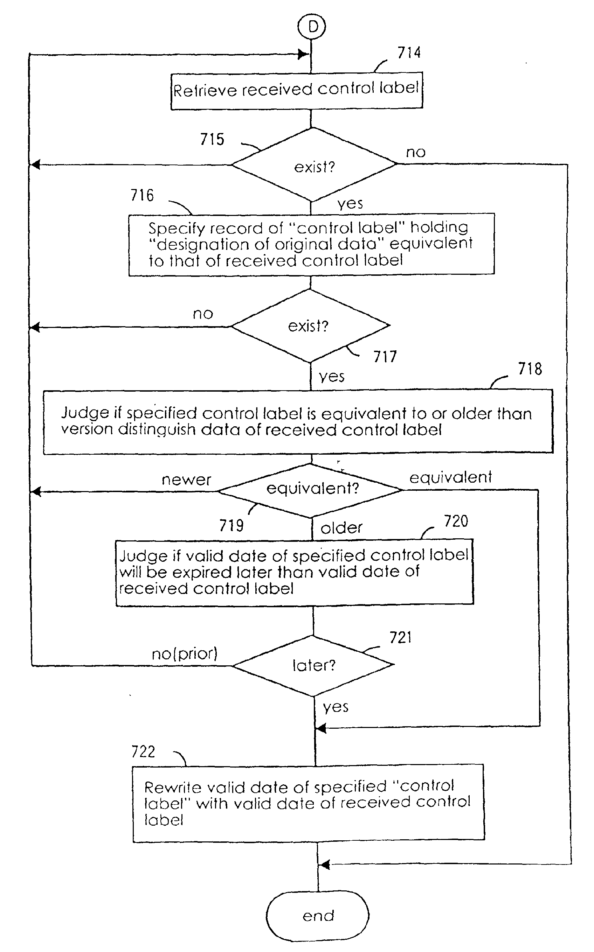

FIG7 illustrates the polling process towards control servers. After connecting to the control server, clients would "send top designation of original control data" 711 to their server. The top designations of original control data are (in many cases) plural and are recorded in recording unit for top designation of original control data 415. The communication control unit 402 notifies the contents to the control server through Internet 401.

Next, the clients "send record of previous reception time". The "previous reception time" has been notified by the control server to the clients in "process for receiving polling from client" explained in Section 6.3 and has been recorded by the clients. The clients notify it to the control server.

The control server transacts the above data (according to the procedure in Section 6.3) and selects "revised control label" that should be sent to the clients. Then, the clients "receive (plural) revised control label(s)" 713.

The clients sequentially retrieve the received control label and operate the following process. They first "specify record of control label holding designation of original data equivalent to that of received control label (from recording unit for control label 407)" 716. If there is the record, they would then "judge if (version of) specified control label is equivalent to or older than version distinguish data of received control label" 718. If they are equivalent in the version, the clients would "rewrite valid date of specified control label with valid date of received control label" 722.

If the version of the specified control label is older than that of the received control label, the clients would "judge if valid date of specified control label will be expired later valid date of received control label" 720. If it is considered to be expired later, the clients would "rewrite valid date of specified record of control label with valid date of received control label" 722.

### 〈〈Section 5.5: Process for starting polling process towards server〉〉

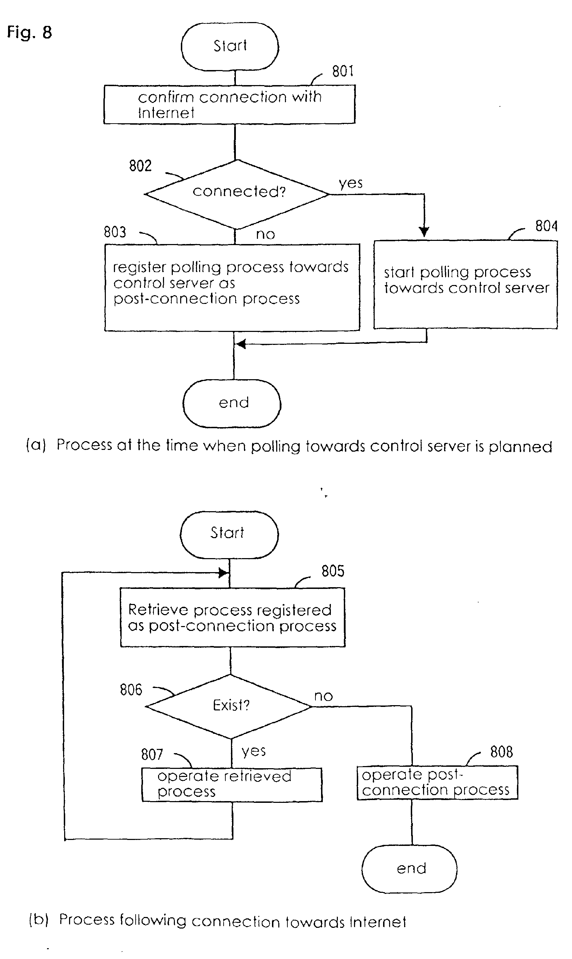

The polling process towards server has been explained in Section 5.4. FIG8 illustrates the procedure for starting this process. A polling schedule is input from input unit 413, is analyzed in input analysis unit 411, and is notified to renewal schedule control unit 409. Although the polling schedule is recorded in recording unit 403 in real usage, FIG4 omits this description. The renewal schedule control unit 409 checks the polling schedule recorded in recording unit 403 at a breaking in from timer 414. If it is just at the time for operating polling, the system would operate "process at the time when polling towards control server is planned" described in FIG8 (a).

Herein, the clients first "confirm connection towards Internet" 801. If it has been already connected, they would "start polling process towards control server (explained in Section 5.4)" 804. If it has not been connected yet, they would register the process to be started later as the connection towards Internet is established for other purpose. This is the process to "register polling process towards control server as post-connection process (to registering unit for piggyback process 404)" 803.

When general processes such as browser or E-mail are started after input from input unit 413 has been analyzed in input analysis unit 411, "general processing unit" 408 operating these processes sends signal to communication control unit 402, and the connection towards Internet is set up. At this time, clients start the process following the connection towards Internet described in FIG8 (b). The clients first "retrieve process registered as post-connection process" 805 by accessing to registering unit for piggyback process 404. If there is "polling process towards control server" registered by a step to "register polling process towards control server as post-connection process (to registering unit for piggyback process 404)" 803 described in FIG8 (a), the clients would'operate the process described in FIG7.

### 〈〈Section 6: Control server〉〉

### 〈〈Section 6.1: Hardware construction of control server〉〉

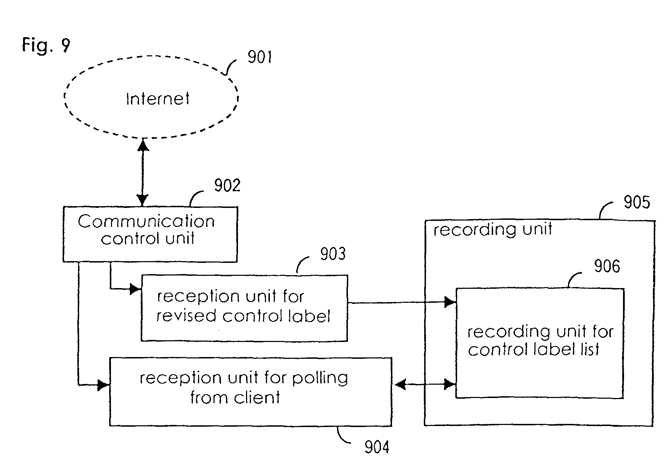

FIG9 illustrates the construction of hardware of control server 305. "Process for receiving revised control label" and "process for receiving polling from client" are operated on this hardware. These processes can also be operated by general computers (such as personal computer) equipped with communication functions. Followings are explanations for details of these processes with reference to the hardware construction in FIG9.

### 〈〈Section 6.2: Process for receiving revised control label〉〉

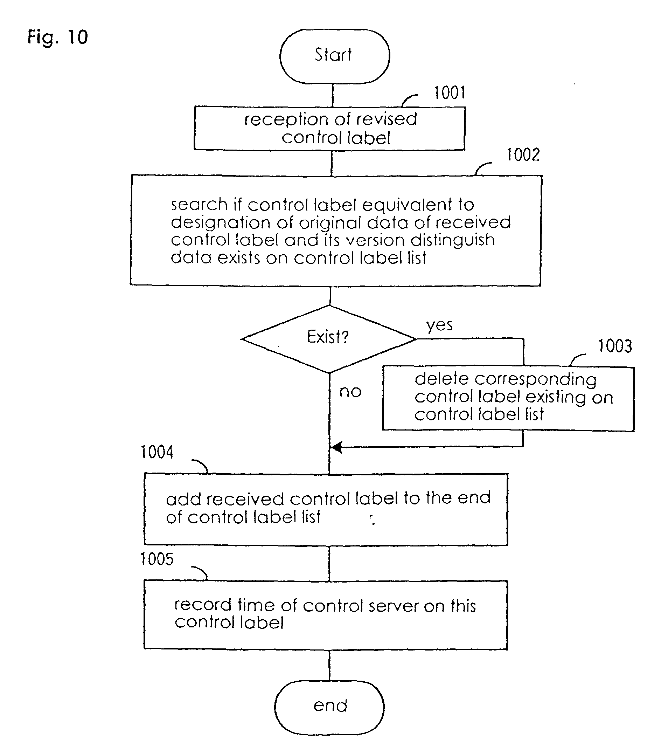

FIG10 illustrates the process for receiving revised control label. "Communication control unit" 902 corresponds to the access from input/output computer to control server 304 towards control server 305 and sets up a path between them. The input/output computer to control server 304 sends the revised control label, and "reception unit for revised control label" 903 receives it. This process is "reception of revised control label" 1001 described in FIG10.

The clients "search if control label equivalent to designation of original data of received control label and its version distinguish data exists on control label list" 1002. The control label list of which the construction has been already explained with FIG2 is recorded on recording unit for control label list 906. Although FIG2 describes the control labels sent from input/output computer to control server 304 towards control server 305 as "revised control label list", they are simply called as "control label list" here since they are all revised control labels.

The clients would delete corresponding control labels if there are any. This is the process for "deleting corresponding control label existing on control label list" 1003. After they finish this process or as soon as they determine that there are no corresponding control labels, the clients "add received control label to the end of control label list" 1004. Then, they "record time (of this point in time) of control server on this control label" 1005.

### 〈〈Section 6.3: Process for receiving polling from client〉〉

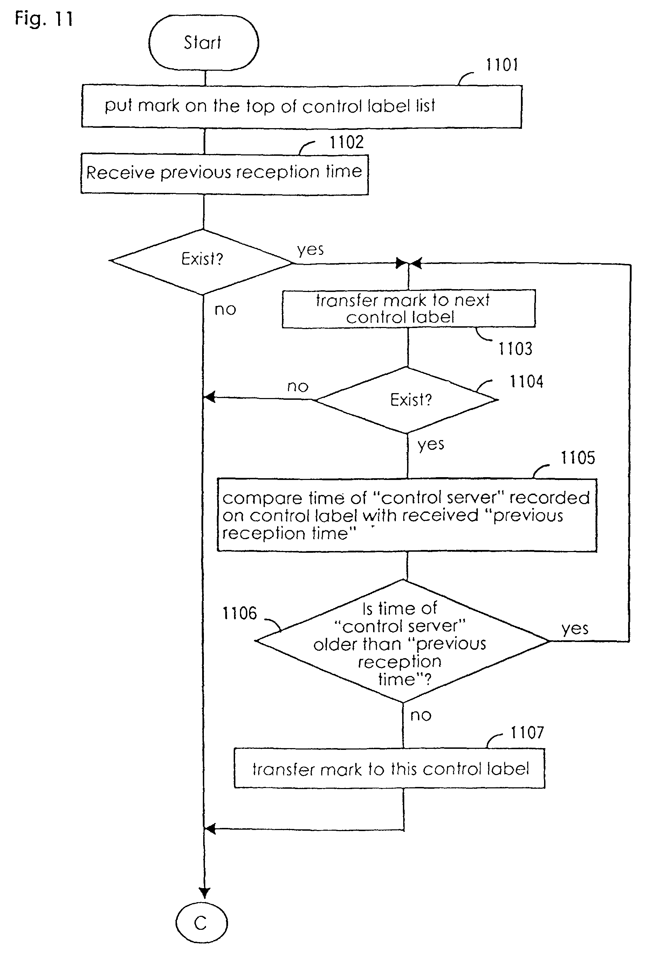

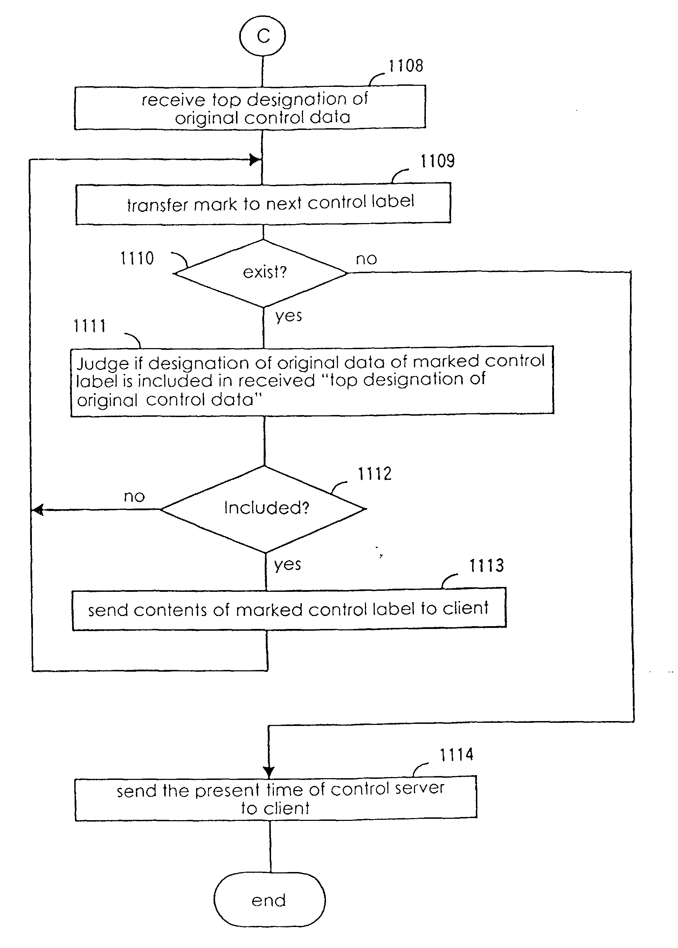

FIG11 illustrates the process for receiving polling from client 302. The client 302 accesses to control server 305 when the polling process towards server (Section 5.4) has been started within client 302. "Communication control unit" 902 corresponds to this access and sets up a path between the client 302 and control server 305. A signal is sent to "reception unit for polling from client" 904 though the path. Followings are descriptions for this process.

Clients first "put mark on the top of control label list 201" 1101 and then "receive previous reception time" 1102. If there are no previous reception time, they would shift into processes on and after C. If there are previous reception time, they would "compare time of control server recorded on control label (within control label list that has been recorded in recording unit for control label list 906) with received previous reception time" 1105, find the oldest control label among those newer than the received "previous reception time", "transfer mark to this control label" 1107, and shift into processes on and after C explained in the following.

In the processes on and after C, the clients first "receive top designation of original control data" 1108. This top designation of original control data could be plural. The clients "judge if designation of original data of marked control label is included in received top designation of original control data" 1111 by sequentially transferring the mark towards newer control labels. If it is considered included, a server would "send contents of (marked) control label to client" 1113. Through the processes described in the above, the server sends client 302 the (revised) control labels that are included in the received top designation of original control data and exist on and after the previous reception time. The server finally "sends the present time of control server to client" 1114.

### INDUSTRIAL APPLICALILITY

Frequent access from many computers to an original data existing only in one computer within the distributed processing system, in which plural computers are connected by communication circuits, leads increase and concentration in communication quantity ( **[Problem 1] [Problem 2]** ). Thereupon, the method for making plural users' computers (clients) to hold copies of the original data had been proposed (Document 1, Document 2) as its solution. However, a collective notification of revision in the original data towards the plural users' computers rather had made another increase and concentration in the communication quantity. Thereupon, the inventor of this invention has proposed the mechanism in which a data provider assigns the valid date to the copy of original data and a client generates and utilizes the copy of the latest original data by accessing to its server when detecting in its access that the copy of original data is invalid (Document 3). However, this method has still accompanied the problem ( **[Problem 3]**) as it cannot handle the unexpected revision in original data of server.

Internet and Intranet also have the problems described in the above as well as problems such as "it is difficult for the server to hold a list of clients holding copies of web data by referring to the specified web data (data)( **[Problem 4]**)" and "it is difficult to send renewed data to clients using dial-up circuits without delay ( **[Problem 5]** )".

In order to solve these problems, this invention has proposed the procedure for "notifying the clients of only the revision in valid date" in addition to the procedure for "inspecting the validity of a copy when accessing to the copy of data recorded within a client and determining to utilize the copy if it is valid or to obtain the latest original data from the server if it is not valid" (Device A). In specific, the system "records control label (designation of original data, version distinguish data, valid date) when generating a copy of original data within a client" (Device B4) and controls the valid date by utilizing this control label.

The notification of revision in valid date makes the valid date recorded within the clients reliable. The clients would make communication with server only when they discover in access that the copy of data has been expired. As a result, operators of the client computers are provided with their necessary data in the latest form, and at the same time, the absolute quantity and concentration of communication quantity are greatly eased.

The communication quantity can be further reduced by "operating polling referring the renewal in valid date from end-user computer towards server" (Device B1), "operating the polling as soon as clients successfully establish the connection towards Internet (for other purpose) after the designated time" (Device B2), "collectively receiving plural revised data on valid dates" (Device B3), "notifying server of the time for receiving revised data at the next polling" (Device B7), "notifying server of the designation of original data of which the clients control the valid date at the polling (Device B8), "determining all original data existing under the top designation of original control target data as the valid date control target (Device B9).

## Claims

1. A method for controlling data within an apparatus 302 of an user of the data in a distributed processing system by checking a valid date of a copy of the data in response to a request for the data from an operator or a program, providing a requester of said copy if it is valid, generating a new copy by reading in a latest data from an apparatus 303 holding an original data and providing said copy if said copy is invalid, comprising:
a method for controlling data, comprising:
(a) a process 722 for revising a record of corresponding valid date by receiving an instruction for revising the valid date of the copy held by said apparatus 713.

2. The method for controlling data as defined in Claim 1, comprising:
(b) a process 511 for recording "a designation of an original data, a version distinguish data of the original data, the valid date" in correspondence with the copy of the data held by said apparatus 302.

3. The method for controlling data as defined in Claim 2, comprising:
(c) a process (716, 718) for specifying the copy of a version that is equivalent to or older than the version corresponding to a designation of the original data included in the instruction for revising the valid date as well as to the version distinguish data of the original data, and rewriting 722 said valid date corresponding to said copy.

4. The method for controlling data as defined in Claim 1, comprising:
(d) a process for operating 804 the polling towards said computer 305 for controlling the valid date of the data, and receiving 713 the instruction for revising the valid date.

5. The method for controlling data as defined in Claim 4, comprising:
(e) a process 713 for collectively receiving plural instructions for revising the valid dates.

6. The method for controlling data as defined in Claim 4, comprising:
(f) a process 712 for notifying a previous polling time to the apparatus 305 for controlling the valid date of the data.

7. The method for controlling data as defined in Claim 4, comprising:
(g) a process (802, 803, 807) for operating the polling at a next time a connection towards Internet is established if the connection towards Internet has not been set up at an expected polling time.

8. The method for controlling data as defined in Claim 4, comprising:
(h) a process 711 for notifying the apparatus 305 for controlling the valid date of the original data of the designation of the original data of the copy that is control target by the valid date within the apparatus 302.

9. The method for controlling data as defined in Claim 8, comprising:
(i) a process 711 for notifying the apparatus 305 for controlling the valid date of the original data of the designation of the original data including the designation of the original data of plural copies that are control target by the valid date within the apparatus 302.

10. A method for controlling the valid date of the data in the apparatus 305 for notifying the revision in the valid date of the data within the distributed processing system, comprising:
the method for controlling data, comprising:
(j) a process 1004 for recording "the designation of the original data, the version distinguish data, the valid date" of the data of which the valid date is revised as the control label; and
(k) a process (1111, 1112) for retrieving the control label among said control labels for the original data designated by the apparatus 302 of the data user, and sending 1113 said retrieved control label to the apparatus 302 of the data user.

11. The method for controlling the valid date of the data within the apparatus 305 for notifying the revision in the valid date of the data in the distributed processing system, comprising:
the method for controlling data, comprising:
(l) a process (1004, 1005) for recording "the designation of the original data, the version distinguish data, the valid date" of the data of which the valid date is revised as the control label as well as the time when the control label is registered; and
(m) a process (1102, 1105, 1111, 1113) for retrieving the control label among said control labels which corresponds to the designation of the original data indicated by the apparatus 302 of the data user and is recorded after the time indicated by the apparatus of data user, and sending it to the apparatus 302 of the data user.

12. An apparatus 302 of the user of the data within the distributed processing system which checks the valid date of the copy of the data in response to the request for the data from the operator or the program, provides the requester of said copy if it is valid, generates the new copy by reading in the latest data from the apparatus 303 holding the original data, and provides said copy if said copy is invalid, comprising:
an apparatus for controlling data, comprising:
(n) a communication control unit 402 receiving 713 the instruction for revising the valid date of the copy of the data; and
(o) an web data control unit 410 operating the process 511 for recording "the designation of the original data, the version distinguish data of the original data, the valid date" and the process (716, 718, 722) for revising the record of the valid date of the version that is equivalent to or older than the version corresponding to the received instruction for revision.

13. The apparatus 302 of the user of the data within the distributed processing system which checks the valid date of the copy of the data in response to the request for the data from the operator or the program, provides the requester of said copy if it is valid, generates the new copy by reading in the latest data from the apparatus 303 holding the original data, and provides said copy if said copy is invalid, comprising:
the apparatus for controlling data, comprising:
(p) the communication control unit 402 operating a process 804 for operating the polling towards the computer 305 for controlling the valid date, sending 712 the previous polling time, and receiving 713 the instruction for revising the valid date of the copy of the data.

14. The apparatus 305 for notifying the revision in the valid date of the data within the distributed processing system, comprising:
the apparatus for controlling data, comprising:
(q) "a reception unit for revised control label 903" operating the processes (1102, 1105, 1111, 1113) for recording "the designation of the original data, the version distinguish data, the valid date" of the data of which the valid date is revised as well as the time when the control label is registered (1004,1005), and retrieving the record among said records which corresponds to the original data indicated by the apparatus 302 of the data user and is recorded after the time indicated by the apparatus 302 of the data user, and sending it to the apparatus 302 of the data user.

15. a computer-readable recording media recording a program that has realized the method for controlling the data in the apparatus 302 of the user of the data within the distributed processing system by checking the valid date of the copy of the data in response to the request for the data from the operator or the program, providing the requester of said copy if it is valid, generating the new copy by reading in the latest data from the apparatus 303 holding the original data, and providing said copy if said copy is invalid, comprising:
the computer-readable recording media recording the program that has realized the method for controlling the data, comprising:
(b) the process 511 for recording "the designation of the original data, the version distinguish data of the original data, the valid date" in correspondence with the copy of the data held by said apparatus;
(a) the process 713 for receiving the instruction for revising the valid date of the copy held by said apparatus; and
(c) the process (716, 718) for specifying the copy of the version that is equivalent to or older than the version corresponding to the designation of the original data included in the instruction for revising the valid date as well as to the version distinguish data of the original data and rewriting said valid date corresponding to said copy 722.

16. the computer-readable recording media recording a program that has realized the method for controlling the data in the apparatus 302 of the user of the data within the distributed processing system by checking the valid date of the copy of the data in response to the request for the data from the operator or the program, providing the requester of said copy if it is valid, generating the new copy by reading in the latest data from the apparatus 303 holding the original data, and providing said copy if said copy is invalid, comprising:
the computer-readable recording media recording the program that has realized the method for controlling the data, comprising:
(d) the process 722 for revising the corresponding valid date by receiving the instruction for revising the valid date of the copy held by said apparatus 713;
(e) the process for operating the polling to said computer 305 for controlling the valid date 804, and receiving the instruction for revising the valid date 713;
(f) the process 712 for notifying the previous polling time to said apparatus 305 for controlling the valid date.

17. The computer-readable recording media recording the program that has realized the method for controlling the valid date of the data in said apparatus 305 for notifying the revision in the valid date to said apparatus 302 of the user of the data of the distributed processing system, comprising:
the computer-readable recording media recording the program that has realized the method for controlling the data, comprising:
(j) the process 1004 for recording "the designation of the original data, the version distinguish data, the valid date" of the data of which the valid date is revised as the control label; and
(k) the process for retrieving (1111, 1112) the control label among said control labels for the original data designated by the apparatus 302 of the data user, and sending 1113 said retrieved control label to the apparatus 302 of the data user.
